# EUROPEAN PATENT SPECIFICATION

(11) **EP 4 283 954 B1**
(45) Date of publication and mention of the grant of the patent: **04.11.2026**
(21) Application number: 21926387.8
(22) Date of filing: 27.12.2021
(51) Int. Cl.: H04L 67/025, G06F 1/3209, G06F 1/329, H04L 41/34, H04L 43/0817, H04L 67/60, H04L 67/1008, G06F 11/30, H04L 47/2408

(54) **COMPUTING POWER INFORMATION PROCESSING METHOD AND FIRST NETWORK DEVICE**
VERFAHREN ZUR VERARBEITUNG VON DATENVERARBEITUNGSLEISTUNG UND ERSTE NETZWERKVORRICHTUNG
PROCÉDÉ DE TRAITEMENT D'INFORMATIONS DE PUISSANCE DE CALCUL ET PREMIER DISPOSITIF DE RÉSEAU

(30) Priority: 22.02.2021 CN 202110196283; 04.03.2021 CN 202110239750
(43) Date of publication of application: 29.11.2023
(73) Proprietor: Huawei Technologies Co., Ltd., Shenzhen, Guangdong 518129 (CN)
(72) Inventor: MA, Qiufang, Shenzhen, Guangdong 518129 (CN); WU, Qin, Shenzhen, Guangdong 518129 (CN); WU, Bo, Shenzhen, Guangdong 518129 (CN); ZHANG, Tuwei, Shenzhen, Guangdong 518129 (CN)
(74) Representative: Gill Jennings & Every LLP
(86) International application number: PCT/CN2021/141668
(87) International publication number: WO 2022/174675

(56) References cited:
- WO-A1-2014/060226
- CN-A- 102 780 775
- CN-A- 104 303 489
- CN-A- 105 210 345
- CN-A- 111 651 253
- US-A1- 2012 281 621
- XIANG TONGJI/YALE UNIVERSITY H NEWMAN CALIFORNIA INSTITUTE OF TECHNOLOGY G BERNSTEIN GROTTO NETWORKING H DU TONGJI/YALE UNIVERSITY: "Resource Orchestration for Multi-Domain Data Analytics; draft-xiang-alto-exascale-network-optimization-03.txt", RESOURCE ORCHESTRATION FOR MULTI-DOMAIN DATA ANALYTICS; DRAFT-XIANG-ALTO-EXASCALE-NETWORK-OPTIMIZATION-03.TXT; INTERNET-DRAFT: ALTO WG, INTERNET ENGINEERING TASK FORCE, IETF; STANDARDWORKINGDRAFT, INTERNET SOCIETY (ISOC) 4, RUE DES FALAISES CH- 1205, no. 3, 3 July 2017 (2017-07-03), pages 1 - 25, XP015120858
- W. ROOME: "Extensible Property Maps for the ALTO Protocol", 3 July 2017 (2017-07-03), pages 1 - 16, XP093154352, Retrieved from the Internet <URL:https://www.ietf.org/archive/id/draft-roome-alto-unified-props-new-01.txt> [retrieved on 20240422]
- W. ROOME: "Application-Layer Traffic Optimization (ALTO) Incremental Updates Using Server-Sent Events (SSE)", 6 November 2020 (2020-11-06), pages 1 - 39, XP093154367, Retrieved from the Internet <URL:https://www.rfc-editor.org/rfc/rfc8895.txt> [retrieved on 20240422]
- G. BERNSTEIN: "ALTO Topology Extensions: Node-Link Graphs", 9 March 2015 (2015-03-09), pages 1 - 12, XP093154412, Retrieved from the Internet <URL:https://datatracker.ietf.org/doc/html/draft-yang-alto-topology-06> [retrieved on 20240422]

## Description

### TECHNICAL FIELD

This application relates to the field of network communication, and more specifically, to a computing power information processing method, a first network device, and a system.

### BACKGROUND

An application-layer traffic optimization (application-layer traffic optimization, ALTO) protocol is based on a client/server (client/server, C/S) structure and uses a Java script object notation (Java script object notation, JSON) as an encoding format. This design makes the ALTO protocol flexible and extensible, and can implement communication between an ALTO client and an ALTO server by using an existing hypertext transfer protocol (hypertext transfer protocol, HTTP). A modular design method is used in the ALTO protocol. A mechanism of communication between the ALTO client and the ALTO server complies with design specifications of the ALTO protocol.

In a related technical solution, network information of a computing resource may be transferred between the ALTO client and the ALTO server by using the ALTO protocol, but resource utilization cannot be improved only based on the network information.

In XIANG TONGJI/YALE UNIVERSITY H NEWMAN CALIFORNIA INSTITUTE OF TECHNOLOGY G BERNSTEIN GROTTO NETWORKING H DU TONGJI/YALE UNIVERSITY: "Resource Orchestration for Multi-Domain Data Analytics; draft-xiang-altoexascale- network-optimization-03.txt", RESOURCE ORCHESTRATION FOR MULTI-DOMAIN DATA ANALYTICS; DRAFT-XIANG-AL TO-EXASCALE-NETWORKOPTIMIZATION- 03.TXT; INTERNET-DRAFT: AL TO WG, INTERNET ENGINEERING TASK FORCE, IETF; STANDARDWORKINGDRAFT, INTERNET SOCIETY (ISOC) 4, RUE DES FALAISES CH- 1205, no. 3, 3 July 2017, pages 1-25, XP015120858, it is proposed that it is feasible to use existing ALTO services to provide information about computation and storage resources in data analytics networks.

In US 2012/281621 A1, a method and apparatus for generating a topology for wireless peer-to-peer (P2P) networks is disclosed.

In W. Roome: "Extensible Property Maps for the AL TO Protocol", , 3 July 2017 (2017-07-03), pages 1-16, XP093154352, Retrieved from the Internet: URL:https:// www.ietf.org/archive/id/draft-roome-alto-unified-propsnew- 01 .txt, extends the Application-Layer Traffic Optimization (ALTO) Protocol by generalizing the concept of "endpoint properties 11 to other entity domains , and by presenting those properties as maps , similar to the network and cost maps in ALTO.

In W. Roome: "Application-Layer Traffic Optimization (AL TO) Incremental Updates Using Server-Sent Events (SSE)", D4 , 6 November 2020 (2020-11-06), pages 1-39, XP093154367, Retrieved from the Internet: URL:https://www.rfc-editor.org/rfc/rfc8895.txt, presents mechanism to allow an ALTO server to push updates to ALTO clients.

In G. Bernstein: "ALTO Topology Extensions: Node-Link Graphs", 9 March 2015, pages 1-12, XP093154412, Retrieved from the Internet: URL:https://datatracker.ietf .org/doc/html/draft-yang-alto-topology-06, designs to provide abstracted (node-link) graph representations of network topology are discussed.

### SUMMARY

This application provides a computing power information processing method, a first network device, and a system, to improve resource and network utilization and improve user experience. The present invention is defined by the features disclosed in the independent claims. Additional embodiments are defined in the dependent claims.

According to a first aspect, a computing power information processing method is provided, and includes: The first network device obtains first computing power information, where the first computing power information indicates computing power information of a compute node corresponding to the first network device. The first network device generates a first application-layer traffic optimization ALTO message, where the first ALTO message carries the first computing power information. The first network device sends the first ALTO message to a second network device based on an ALTO protocol.

In the foregoing technical solution, the computing power information of the compute node may be transferred by using the ALTO protocol. In this way, a computing task can be dynamically and flexibly scheduled based on a service requirement, thereby improving resource and network utilization and improving user experience.

With reference to the first aspect, in some implementations of the first aspect, the compute node is located in a first network domain, and the first network domain is associated with the first network device.

With reference to the first aspect, in some implementations of the first aspect, the first computing power information is carried in a property map field of the first ALTO message.

The first network device receives a first subscription request message sent by the second network device, where the first subscription request message is used to request the first network device to report the first computing power information to the second network device when the first computing power information changes. The first network device sends the first ALTO message to the second network device based on the ALTO protocol when the first computing power information changes.

In the foregoing technical solution, the ALTO protocol supports a publish/subscribe mechanism based on an original request/response. An ALTO client is allowed to subscribe based on an attribute value of an entity. When the attribute value collected by an ALTO server changes, the ALTO server can actively publish a message to the ALTO client. This publish/subscribe mechanism is flexible, and is more efficient for some application requests that have high real-time requirements and need to transmit a large amount of data.

With reference to the first aspect, in some implementations of the first aspect, the method further includes: The first network device receives a first subscription request message sent by the second network device, where the first subscription request message is used to request the first network device to periodically report the first computing power information to the second network device. The first network device sends the first ALTO message to the second network device based on the ALTO protocol and a preset period.

With reference to the first aspect, in some implementations of the first aspect, the first subscription request message further includes any one or a combination of the following attribute information: location information of the compute node, link status information, a service type identifier, and computing power type information, the first computing power information carried in the first ALTO message indicates computing power information of the first compute node, and the first compute node is determined by the first network device from the compute node based on the attribute information.

With reference to the first aspect, the method further includes: The first network device receives a second subscription request message sent by the second network device, where the second subscription request message is used to request the first network device to report service type information supported by the compute node to the second network device. The first network device sends a second ALTO message to the second network device based on the ALTO protocol, where the second ALTO message carries the service type information supported by the compute node.

With reference to the first aspect, in some implementations of the first aspect, the method further includes: The first network device sends first network information to the second network device, where the first network information indicates network information of the compute node corresponding to the first network device, and the network information includes but is not limited to any one or a combination of the following information: the location information of the compute node, the link status information, and the supported service type information.

With reference to the first aspect, in some implementations of the first aspect, the first network device is a first local ALTO server of a first operator network, and the second network device is a second local ALTO server of the first operator network; or the first network device is a local ALTO server of the first operator network, and the second network device is a global ALTO server of the first operator network; or the first network device is the global ALTO server of the first operator network, and the second network device is a global ALTO server of a second operator network; or the first network device is the local ALTO server of the first operator network, and the second network device is a local ALTO server of the second operator network; or the first network device is an ALTO server, and the second network device is an ALTO client, where the ALTO server is any one of the following: the local ALTO server of the first operator network, the global ALTO server of the first operator network, the local ALTO server of the second operator network, and the global ALTO server of the second operator network.

It is to be understood that, the local ALTO server of the first operator network is configured to collect local information corresponding to the local ALTO server of the first operator network, and the global ALTO server of the first operator network is configured to summarize information collected by all local ALTO servers of the first operator network.

With reference to the first aspect, in some implementations of the first aspect, the first network device is the ALTO server, the second network device is the ALTO client, and the ALTO client is a computing power network management system; and the method further includes: The first network device receives a third subscription request message sent by the second network device, where the third subscription request message is used to request first capability information, and the first capability information indicates capability deployment information of the compute node corresponding to the first network device. The first network device sends a third ALTO message to the second network device based on the ALTO protocol, where the third ALTO message carries the first capability information.

In an example, the deployment information includes but is not limited to any one or a combination of the following information: remaining compute load, remaining storage space, and remaining memory space of the compute node, a service identifier of the compute node, a service type (for example, a fire wall or a load balancer) of the compute node, location information of the compute node, total load information of the compute node, compute load used information, memory used information, total storage space information, total memory information, and disk space information, where the location information of the compute node may include geographical location information of the compute node, internet protocol (internet protocol, IP) address information, and location information of the compute node deployed in a data center (for example, deployed in which rack or virtual machine (virtual machine, VM) mirror).

According to a second aspect, a first network device is provided, and includes an obtaining module, a processing module, and a sending module.

The obtaining module is configured to obtain first computing power information, where the first computing power information indicates computing power information of a compute node corresponding to the first network device.

The processing module is configured to generate a first application-layer traffic optimization ALTO message, where the first ALTO message carries the first computing power information.

The sending module is configured to send the first ALTO message to a second network device based on an ALTO protocol.

With reference to the second aspect, in some implementations of the second aspect, the compute node is located in a first network domain, and the first network domain is associated with the first network device.

With reference to the second aspect, in some implementations of the second aspect, the first computing power information is carried in a property map field of the first ALTO message.

With reference to the second aspect, in some implementations of the second aspect, the first network device further includes a receiving module.

The receiving module is configured to receive a first subscription request message sent by the second network device, where the first subscription request message is used to request the first network device to report the first computing power information to the second network device when the first computing power information changes. The sending module is specifically configured to send the first ALTO message to the second network device based on the ALTO protocol when the first computing power information changes.

With reference to the second aspect, in some implementations of the second aspect, the receiving module is configured to receive a first subscription request message sent by the second network device, where the first subscription request message is used to request the first network device to periodically report the first computing power information to the second network device; and the sending module is specifically configured to send the first ALTO message to the second network device based on the ALTO protocol and a preset period.

With reference to the second aspect, in some implementations of the second aspect, the first subscription request message further includes any one or a combination of the following attribute information: location information of the compute node, link status information, a service type identifier, and computing power type information, the first computing power information carried in the first ALTO message indicates computing power information of the first compute node, and the first compute node is determined by the first network device from the compute node based on the attribute information.

With reference to the second aspect, the receiving module is further configured to receive a second subscription request message sent by the second network device, where the second subscription request message is used to request the first network device to report service type information supported by the compute node to the second network device; and the sending module is further configured to send a second ALTO message to the second network device based on the ALTO protocol, where the second ALTO message carries the service type information supported by the compute node.

With reference to the second aspect, in some implementations of the second aspect, the sending module is further configured to send first network information to the second network device, where the first network information indicates network information of the compute node corresponding to the first network device, and the network information includes but is not limited to any one or a combination of the following information: the location information of the compute node, the link status information, and the supported service type information.

With reference to the second aspect, in some implementations of the second aspect, the first network device is a first local ALTO server of a first operator network, and the second network device is a second local ALTO server of the first operator network; or the first network device is a local ALTO server of the first operator network, and the second network device is a global ALTO server of the first operator network; or the first network device is the global ALTO server of the first operator network, and the second network device is a global ALTO server of a second operator network; or the first network device is the local ALTO server of the first operator network, and the second network device is a local ALTO server of the second operator network; or the first network device is an ALTO server, and the second network device is an ALTO client, where the ALTO server is any one of the following: the local ALTO server of the first operator network, the global ALTO server of the first operator network, the local ALTO server of the second operator network, and the global ALTO server of the second operator network.

With reference to the second aspect, in some implementations of the second aspect, the first network device is the ALTO server, the second network device is the ALTO client, and the ALTO client is a computing power network management system; the receiving module is further configured to receive a third subscription request message sent by the second network device, where the third subscription request message is used to request first capability information, and the first capability information indicates capability deployment information of the compute node corresponding to the first network device; and the sending module is further configured to send a third ALTO message to the second network device based on the ALTO protocol, where the third ALTO message carries the first capability information.

### BRIEF DESCRIPTION OF DRAWINGS

FIG. 1 is an architectural diagram of a system applied to an embodiment of this application;
FIG. 2 is a schematic flowchart of a computing power information processing method according to an embodiment of this application;
FIG. 3 is a schematic flowchart of another computing power information processing method according to an embodiment of this application;
FIG. 4 is a schematic flowchart of still another computing power information processing method according to an embodiment of this application;
FIG. 5 is a schematic flowchart of a method for deploying a compute instance for an edge site according to an embodiment of this application;
FIG. 6 is a schematic diagram of a structure of a first network device 600 according to an embodiment of this application; and
FIG. 7 is a schematic diagram of a hardware structure of a first network device 2000 according to an embodiment of this application.

### DESCRIPTION OF EMBODIMENTS

The following describes technical solutions of this application with reference to the accompanying drawings.

All aspects, embodiments, or features are presented in this application based on a system that includes a plurality of devices, components, modules, and the like. It is to be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" and "for example" are used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

In embodiments of this application, "corresponding or related (corresponding or related)" and "corresponding (corresponding)" may be interchangeably used sometimes. It is to be noted that meanings expressed by the terms are consistent when differences are not emphasized.

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" in different parts of this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, "at least one" means one or more, and "a plurality of" means two or more. The term "and/or" describes an association relationship between associated objects and represents that three relationships may exist. For example, A and/or B may represent that only A exists, both A and B exist, and only B exists, where A and B may be in a singular or plural form. The character "/" generally indicates an "or" relationship between the associated objects. "At least one of the following items" or a similar expression thereof refers to any combination of these items, including one item or any combination of more items. For example, at least one of a, b, or c may represent a, b, c, a-b, a-c, b-c, or a-b-c, where a, b, and c may be in a singular or plural form.

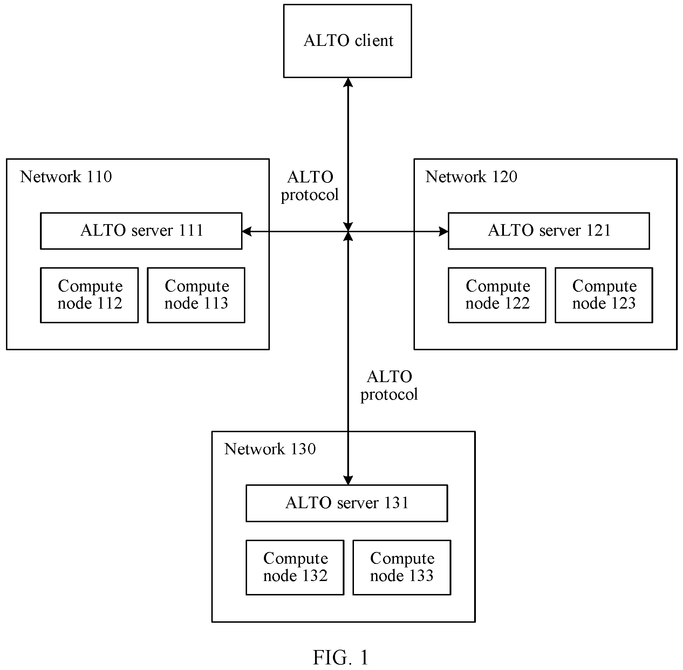

FIG. 1 is an architectural diagram of a system applied to an embodiment of this application. As shown in FIG. 1, there may be a plurality of networks in the architectural diagram, for example, a network 110, a network 120, and a network 130. Each network may belong to an independent domain, and the domain may be a network domain or a management domain. This is not specifically limited in embodiments of this application.

In an example, the network 110 and the network 120 in the architectural diagram of a system may respectively be two edge clouds (which may also be referred to as edge sites (edge sites)), and the network 130 may be a central cloud. The edge site may be an edge cloud data center network close to an end user, and the center cloud may be a large data center network. It is to be understood that, computing resources and services in cloud computing are generally centralized in a large data center (for example, the central cloud), and the end user accesses these resources and services at an "edge" of a network. Therefore, compared with services and functions in a cloud data center, infrastructure such as computing and storage may be "sunk" to a network edge (which may also be referred to as an edge cloud or an edge site) closer to the user, and resources such as computing, storage, network, and communication resources are provided at the network edge.

In another example, the network 110 and the network 120 in the architectural diagram of a system may be two edge data centers, and the network 130 may be a large data center network.

In another example, the network 110 and the network 120 in the architectural diagram of a system may be an enterprise network or a campus network, and the network 1320 may be a core network.

All the network 110, the network 120, and the network 130 may provide resources such as computing, storage, network, and communication resources. Specifically, the network 110 is used as an example. The network 110 may include one or more compute nodes, for example, a compute node 112 and a compute node 113. It is to be understood that, the compute node is a computing entity that can provide a computing resource service in a network, and may be a physical server, or may be a compute instance on a physical server. This is not specifically limited in this application. A compute node may have a plurality of different compute instances, and different compute instances may provide different compute services. Each compute instance may exist in a same network, or may belong to different networks. This is not specifically limited in this application.

An application-layer traffic optimization (application-layer traffic optimization, ALTO) server is a server running an ALTO protocol, is associated with one or more networks mentioned above, and is responsible for collecting related information of the associated networks, computing power information of compute nodes, and the like. For example, each network is associated with one ALTO server. It is assumed that an ALTO server 111 is associated with the network 110, and the ALTO server 111 is responsible for collecting network information and computing power information of the compute node 112 and the compute node 113 in the network 110. The ALTO server 111 may be located in the network 110, or may be located outside the network 110. This is not specifically limited in this application. In an example, the ALTO server 111 is located in the network 110, and may be an independent device in the network 110, or may be co-deployed with another device in the network 110. For example, the ALTO server 111 and a compute node in the network 110 are co-deployed.

It is to be understood that, the ALTO protocol is based on a client/server (client/server, C/S) structure, uses a representational state transfer (representational state transfer, REST)-ful interface design, and uses a Java script object notation (Java script object notation, JSON) as an encoding format. This design makes the ALTO protocol flexible and scalable, and can implement communication between an ALTO client and an ALTO server by using an existing hypertext transfer protocol (hypertext transfer protocol, HTTP). A modular design method is used in the ALTO protocol. A mechanism of communication between the ALTO client and the ALTO server complies with design specifications of the ALTO protocol.

Embodiments of this application provide a computing power information processing method. In the method, the computing power information of the compute node may be transferred by using the ALTO protocol. In this way, a computing task can be dynamically and flexibly scheduled based on a service requirement, thereby improving resource and network utilization and improving user experience.

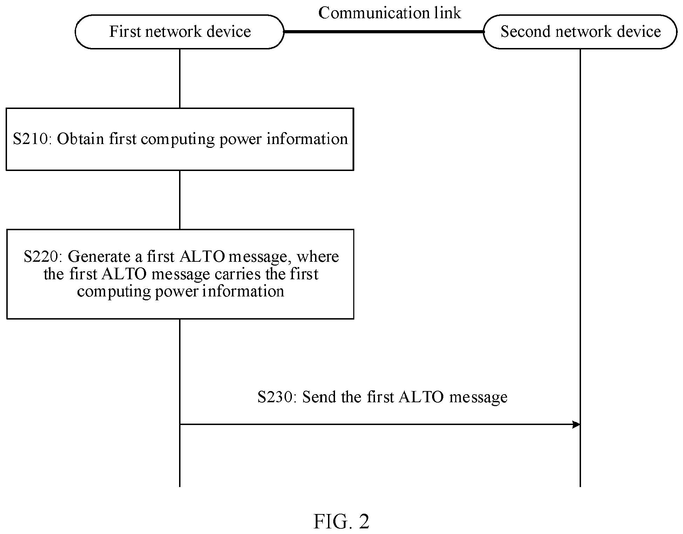

FIG. 2 is a schematic flowchart of a computing power information processing method according to an embodiment of this application. As shown in FIG. 2, the method may include steps 210 to 230. The following separately describes steps 210 to 230 in detail.

Step 210: A first network device obtains first computing power information, where the first computing power information indicates computing power information of a compute node corresponding to the first network device.

Using the architectural diagram of a system shown in FIG. 1 as an example, the first network device may be any ALTO server in FIG. 1. The first computing power information obtained by the first network device may be computing power information of one or more compute nodes corresponding to the first network device. For example, the first network device is the ALTO server 111, and the ALTO server 111 may obtain the computing power information of the compute node 112 and the compute node 113 in the network 110 that is associated with the ALTO server 111. There are a plurality of specific implementations in which the first network device obtains the first computing power information. Different implementations are separately described in detail below by using an example in which the first network device is the ALTO server 111, and the ALTO server 111 is responsible for obtaining the computing power information of the compute node 112 and the compute node 113 in the network 110 that is associated with the ALTO server 111.

In a possible implementation, the ALTO server 111 is co-deployed or interacts with a computing power network management and orchestration system deployed in the network 110, to obtain the computing power information of the compute node 112 and the compute node 113.

In another possible implementation, the ALTO server 111 may also separately collect the computing power information from the compute node 112 and the compute node 113 in a manner such as extending a border gateway protocol (border gateway protocol, BGP).

In another possible implementation, a distributed database may also be deployed in the ALTO server 111, and the computing power information of the compute node 112 and the compute node 113 may be periodically written and updated by the compute node 112, the compute node 113, or the computing power network management and orchestration system deployed in the network 110.

It is to be understood that, the computing power information may be represented as computing power or may be represented as computing resource performance, and refers to computing resource performance or computing storage resource performance, including information about various processing capabilities such as data computing and storage of the compute node.

Step 220: The first network device generates a first ALTO message, where the first ALTO message carries the first computing power information.

For example, in this embodiment of this application, a property map field of the ALTO protocol may be extended, so that the first network device may carry the first computing power information by using the property map field. In an example, the first computing power information may be carried in a property map field of the first ALTO message.

Optionally, in some embodiments, a network map field may also be extended, so that the network map field can describe a type of a service instance that can be processed by an edge site and an address of a compute node.

Step 230: The first network device sends the first ALTO message to a second network device based on an ALTO protocol.

The architectural diagram of a system shown in FIG. 1 is used as an example. It is assumed that the network 110 and the network 120 are respectively two edge sites, the network 130 is a central site, the ALTO server 111 may be referred to as a local ALTO server 111, an ALTO server 121 may be referred to as a local ALTO server 121, and an ALTO server 131 may be referred to as a global ALTO server 131. In an example, the first network device may be the local ALTO server 111, and the second network device may be the local ALTO server 121. In another example, the first network device is the local ALTO server 111 or the local ALTO server 121, and the second network device is the global ALTO server 131. In another example, the first network device is a global ALTO server of a first operator network (for example, the network 110, the network 120, and the network 130 belong to a first operator, and the global ALTO server of the first operator network is the global ALTO server 131), and the second network device is a global ALTO server (not shown in FIG. 1) of a second operator network. In another example, the first network device is a local ALTO server of the first operator network (for example, the network 110, the network 120, and the network 130 belong to the first operator, and the local ALTO server of the first operator network is the local ALTO server 111 or the local ALTO server 121), and the second network device is a local ALTO server (not shown in FIG. 1) of the second operator network. In another example, the first network device is an ALTO server, and the second network device is an ALTO client, where the ALTO server is any one of the following: the local ALTO server 111, the local ALTO server 121, and the global ALTO server 131.

It is to be understood that, when both the first network device and the second network device are ALTO servers, the first network device may be used as an ALTO server, and the second network device may be used as an ALTO client, so that based on the client/server (C/S) structure, the first network device sends the first ALTO message to the second network device based on the ALTO protocol.

Optionally, before step 230, the first network device may further receive a first subscription request message sent by the second network device, so that the first network device may send the first ALTO message to the second network device based on the first subscription request message. There are a plurality of specific implementations, and two possible implementations are described in detail below.

In a possible implementation, the first subscription request message sent by the second network device to the first network device is used to request the first network device to periodically report the first computing power information to the second network device. After receiving the first subscription request message, the first network device may send the first ALTO message to the second network device based on the ALTO protocol and a preset period.

In another possible implementation, the first subscription request message sent by the second network device to the first network device is used to request the first network device to report the first computing power information to the second network device when the first computing power information changes. After the first network device receives the first subscription request message, when the first computing power information changes, the first network device sends the first ALTO message to the second network device based on the ALTO protocol. It is to be understood that, a period in which the first network device detects whether the first computing power information changes may be the same as a period in which the first network device collects the first computing power information, or the second network device may also specify, by using the first subscription request message, a period for detecting whether the first computing power information changes. This is not specifically limited in this application.

Optionally, in some embodiments, the first subscription request message sent by the second network device to the first network device may further carry some attribute information. The attribute information may include but is not limited to any one or a combination of the following: location information of the compute node, link status information, and a service type identifier. The first network device may report computing power information corresponding to a specified compute node to the second network device based on an attribute carried in the first subscription request message. In this way, the second network device may obtain the computing power information corresponding to the specified compute node, and does not need to obtain computing power information of all compute nodes associated with the first network device, so that working efficiency can be improved.

Optionally, in some embodiments, the first network device may further send network information of the compute node corresponding to the first network device to the second network device. In other words, the first network device may send, to the second network device, the network information and the computing power information of the compute node corresponding to the first network device. In this way, the second network device may determine an optimal compute node based on the network information and the computing power information of the compute node, thereby implementing load balance of services, improving resource utilization, and improving user experience.

In an example, the network information of the compute node may include but is not limited to any one or a combination of the following: the location information of the compute node, link status information, and supported service type information. The location information of the compute node is generally location information of the compute node in a single domain (which may be a network domain or a management domain). The link status information may be data information related to a delay, bandwidth, jitter, a service level agreement (service level agreement, SLA), and the like of a link between compute nodes. The supported service type information may be a service type supported by the compute node, for example, a fire wall (fire wall, FW) service or a load balance (load balance, LB) service.

Optionally, in some embodiments, the second network device may further obtain, by sending a subscription request to the first network device, the service type information supported by the compute node. For example, the second network device may further send a second subscription request message to the first network device, where the second subscription request message is used to request the first network device to report, to the second network device, information such as a service type supported by a compute node associated with the first network device.

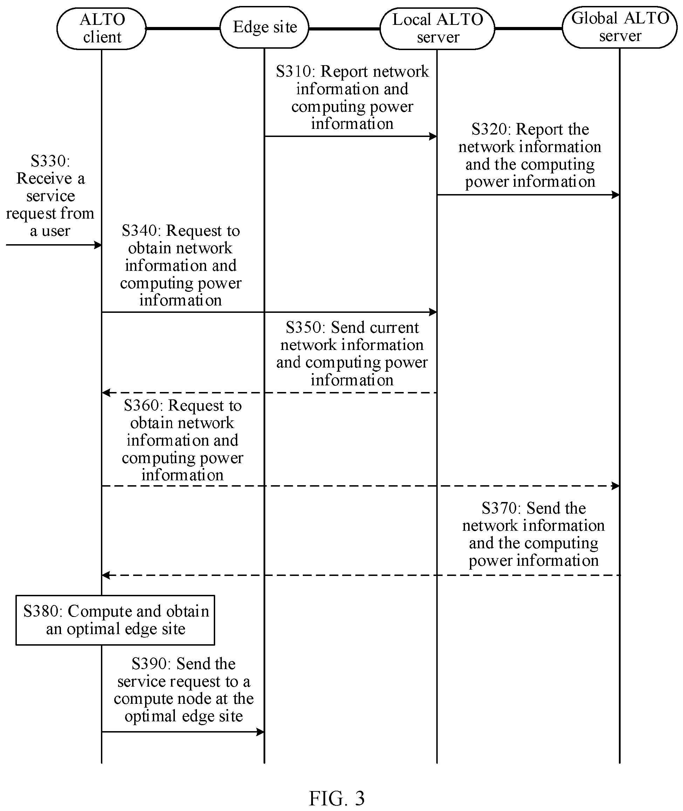

With reference to FIG. 3, a specific implementation of the computing power information processing method provided in embodiments of this application is described in detail below. It is to be understood that, an example in FIG. 3 is merely intended to help a person skilled in the art understand this embodiment of this application, instead of limiting this embodiment of this application to a specific value or a specific scenario of the example. It is clear that a person skilled in the art can make various equivalent modifications or changes based on the example in FIG. 3 provided below, and such modifications and changes also fall within the scope of embodiments of this application.

FIG. 3 is a schematic flowchart of another computing power information processing method according to an embodiment of this application. As shown in FIG. 3, the method may include steps 310 to 390. The following describes steps 310 to 390 in detail.

Step 310: An edge site reports network information and computing power information to a local ALTO server associated with the edge site.

In other words, a local ALTO server deployed in a single domain may collect network information and computing power information of all edge sites in a local domain. In this embodiment of this application, it is assumed that each edge site belongs to a single domain. In an example, a scenario shown in FIG. 1 is used as an example. The local ALTO server 111 may collect the network information and computing power information of the compute node 112 and the compute node 113 in the network 110. The local ALTO server 121 may collect network information and computing power information of a compute node 122 and a compute node 123 in the network 120.

There are a plurality of specific implementations. This is not specifically limited in this application. The local ALTO server 111 is used as an example, in a possible implementation, the local ALTO server 111 is co-deployed or interacts with a computing power network management and orchestration system deployed in the network 110, to obtain the network information and computing power information of the compute node 112 and the compute node 113. In another possible implementation, the local ALTO server 111 may also separately collect the network information and computing power information from the compute node 112 and the compute node 113 in a manner such as extending a border gateway protocol (border gateway protocol, BGP). In another possible implementation, a distributed database may also be deployed in the local ALTO server 111, and the network information and computing power information of the compute node 112 and the compute node 113 may be periodically written and updated by the compute node 112, the compute node 113, or the computing power network management and orchestration system deployed in the network 110. For descriptions of the network information and the computing power information, refer to the descriptions in FIG. 2, and details are not described herein again.

Step 320: The local ALTO server publishes the network information and computing power information collected in the local domain to the global ALTO server.

Specifically, a local ALTO server in each domain separately publishes, by using the ALTO protocol, obtained network information and computing power information to a global ALTO server deployed in the central cloud. The scenario shown in FIG. 1 is used as an example. The local ALTO server 111 and the local ALTO server 121 respectively publish the obtained network information and computing power information to the global ALTO server 131 by using the ALTO protocol.

It is to be understood that, communication between the local ALTO server and the global ALTO server complies with a communication criterion of the ALTO protocol. In other words, the global ALTO server is used as an ALTO client, and sends a request to the local ALTO server to obtain the network information and computing power information in the local domain that are collected by the global ALTO server.

In an example, a manner of an interaction process between the global ALTO server 131 and the local ALTO server in each domain may be as follows: The global ALTO server 131 first obtains network information (for example, a network map) in each domain, and then may query or subscribe to computing power information (for example, a computing capability and load) on a compute instance of a specified edge site.

It is to be understood that, because the information collected by the global ALTO server is not unchanged, for example, network location information of the network map may be relatively stable in a relatively long period of time, and some information in a cost map or a property map may need to be frequently updated. Therefore, the global ALTO server may need to periodically trigger execution of collecting the network information and the computing power information, and execution of step 310 and step 320 is not a single-time execution, but is a periodic execution.

For example, it is assumed that there are two edge site in total, namely, a PID1 (whose ID is 25100) and a PID2 (whose ID is 25200). The PID1 is associated with the local ALTO server 111. The PID1 provides two services, namely, an FW service and an LB service. IPv4 addresses of compute nodes that are in the edge site and that provide the FW service are respectively 10.247.0.10 and 10.247.0.20, and an address of a compute node that provides the LB service is 10.247.0.30. The PID2 is associated with the local ALTO server 121. The PID2 can provide two services, namely, an LB service and an Acceleration service. An address of a compute node that is in the edge site and that provides the LB service is 20.247.0.10, and an address of a compute node that provides the Acceleration service is 20.247.0.20. The following example provides a possible information interaction manner between the global ALTO server and the local ALTO server in each domain. It is to be understood that content after "//" represents explanation information of JSON code.
1. The global ALTO server 131 first requests the network map, to obtain location information of the edge site and a service type that can be processed by the edge site.

### GET /networkmap HTTP/1.1

The local ALTO server in the single domain responds to a request of the global ALTO server 131, and a response body is a string of JSON code. There are a plurality of specific implementations of the response. The following uses an example in which the local ALTO server 111 responds to the request of the global ALTO server 131, and two different response manners are described below by using the JSON code.

A possible response manner is as follows:

```
          response: HTTP/1.1 200 OK
             {
              "meta": {
          ...
              }, //return body metadata information
              "network-map": {
                   "PID1": { //PID1 corresponds to an edge site
                      "FW-service-ID1": { //a service that can be processed by the edge site is
                      named FW-service-ID1
                          "ipv4": [
                                "10.247.0.10/24", //an address of a compute node that can
                                process the FW service at the
             edge site, where a plurality of compute nodes may be capable of
                                processing a same service
                                "10.247.0.20/24"
                           ]
                       },
                      "LB-service-ID2": { //a service that can be processed by the edge site is
                      named LB-service-ID2
                           "ipv4": [
                                "10.247.0.30/24" //an address of a compute node that can
                                process the LB service at the edge site
                           ] } }
          }
```

In the response, a service instance ID is introduced between a PID and an IPv4 layer, and is used to represent that a service has a plurality of service instances at different locations. The service instance ID is used to identify each service instance such as a firewall service, and the IPv4 address is used to describe different locations of specified service instances.

Another possible response manner is as follows, where "bsid" is used to indicate a location of the edge site:

```
          response: HTTP/1.1 200 OK
          {
              "meta": {
          ...
              }, //return body metadata information
              "network-map": {
                   "FW-service-ID1": {
                       "ipv4": ["10.247.0.10/24", "10.247.0.20/24"], //locations that are
                       collected by the local ALTO server and that
             are of all compute nodes that can process the FW
                       service
                       "bsid": "25120"//IDs of edge sites corresponding to the locations of the
                       compute nodes
                   },
                   "LB-service-ID2": {
                       "ipv4": "10.247.0.30/24", //locations that are collected by the ALTO
                       server and that are of all compute nodes that can process the LB service
                       "bsid": "25120"//IDs of edge sites corresponding to the locations of the
                       compute nodes
          } } }
```

The local ALTO server 121 may also respond to the request of the global ALTO server 131 by using the foregoing method, and an implementation thereof is similar to the method for the local ALTO server 111 to respond to the global ALTO server 131. For details, refer to a response process of the local ALTO server 111. Details are not described herein again.

2. The global ALTO server 131 queries or subscribes to a computing capability and load of a service instance of a specified edge site:

```
query request: POST /propmap/lookup/ane-dc HTTP/1.1
             {
               "entities" : [".PID1.FW-service-ID1",
                              ".PID1.LB-service-ID2"],
               "properties" : ["compute-load", "storage-capacity", "cpu"]
             }//perform filtering based on content in
              entities, and return three attributes, namely,
 "compute-load", "storage-capacity", and "cpu" for each compute instance
          response: HTTP/1.1 200 OK
            {
               "meta" : {
               },
          "property-map": {
                 ".PID1.FW-service-ID1":
                    {"compute-load":80 percentage,"storage-capacity" : 40000 Gbytes, "cpu" :
                    500 Cores}, //computing power information of the FW service on the PID1
                 ".PID1.LB-service-ID2":
                    {"compute-load":88 percentage,"storage-capacity" : 100 Gbytes, "cpu" :
                    200 Cores}, //computing power information of the LB service on the PID1
               }
             }
```

Step 330: The ALTO client receives a service request from a user side.

For example, the service request may be a virtual reality (virtual reality, VR) request, or an artificial intelligence (artificial intelligence, AI) training request of an individual user.

Step 340: The ALTO client obtains current network information and computing power information from the local ALTO server.

Communication between the ALTO client and the local ALTO server complies with the communication criterion of the ALTO protocol. In an example, the ALTO client may send a query request to a local ALTO server 111, and the local ALTO server 111 may report, to the ALTO client based on the ALTO protocol, network information and computing power information that are in a corresponding domain and that are collected by the local ALTO server 111. In another example, the ALTO client may further send a subscription request to a local ALTO server 111, and the local ALTO server 111 may periodically report, to the ALTO client based on the ALTO protocol, network information and computing power information that are in a corresponding domain and that are collected by the local ALTO server 111, or actively report network information and computing power information to the ALTO client based on the ALTO protocol when the network information or computing power information in the corresponding domain changes.

In a case, if the local ALTO server has related network information and computing power information, step 350 may be performed. In another case, if the local ALTO server cannot respond to the request of the ALTO client, steps 360 and 370 may be performed.

Step 350: The local ALTO server sends the current network information and computing power information to the ALTO client.

If the local ALTO server has related network information and computing power information, the local ALTO server may return the network information and the computing power information to the ALTO client. For a specific response process, refer to the implementation process in step 320. Details are not described herein again.

Optionally, if the local ALTO server cannot respond to the request of the ALTO client, for example, the local ALTO server is currently overloaded and cannot process the request of the ALTO client, the method may further include steps 360 and 370.

Step 360: The ALTO client obtains network information and computing power information from the global ALTO server.

Specifically, the local ALTO server returns an HTTP 307 (temporary redirect) status code to the ALTO client and indicates an address of the global ALTO server, and the ALTO client further obtains the network information and computing power information from the global ALTO server based on the address of the global ALTO server. The request manner is the same as step 340. For details, refer to the descriptions in step 340. Details are not described herein again.

Step 370: The global ALTO server returns the network information and the computing power information to the ALTO client.

The following example provides a possible interaction manner in which the global ALTO server returns, to the ALTO client, network information and computing power information that are in each domain and that are collected by the global ALTO server.
1. The ALTO client queries the global ALTO server for locations of compute nodes at all edge sites and returns results
   request: GET /networkmap HTTP/1.1

A possible response manner of the global ALTO server is as follows:

```
          response: HTTP/1.1 200 OK
                 {
                    "meta" : {
          ...
                    },
                       "network-map": {
                   "PID1": {//use an edge site as a
             first layer, and describe all service instance
                   IDs and compute node addresses at the site
                       "FW-service-ID1": {
                           "ipv4": [
                                "10.247.0.10/24",
                                "10.247.0.20/24"
                       ] },
                       "LB-service-ID2": {
                           "ipv4": [
                                "10.247.0.30/24"
                   ] } },
                   "PID2": {
                       "LB-service-ID2": {
                           "ipv4": [
                                "20.247.0.10/24"
                       "Acceleration-service-ID3": {
                           "ipv4": [
                                "20.247.0.20/24" ] } },
          } }
```

Another possible response manner of the global ALTO server is as follows:

```
          response: HTTP/1.1 200 OK
          {
              "meta": {
          ...
              },
              "network-map": {
                   "FW-service-ID1": {//Use a service instance ID as a first layer, and describe
                   an address of a corresponding server
             that processes the service request and a corresponding edge
                   site ID
                       "ipv4": [
                           "10.247.0.10/24",
                           "10.247.0.20/24",
                          ],
                       "bsid": [
                           "25100",
                           "25100",
                          ]
                   },
                   "LB-service-ID2": {
                       "ipv4": [
                           "10.247.0.30/24",
                           "20.247.0.10/24"
                       ],
                       "bsid": [
                           "25100",
                           "25200"
                       ]
                   },
                   "Acceleration-service-ID3": {
                       "ipv4": [
                           "20.247.0.20/24",
                         ],
                       "bsid": [
                           "25200",
                           ]
          } } }
```

2. The ALTO client specifies an edge site and queries the global ALTO server for a specified service capability and service load information:

```
request: POST /propmap/lookup/ane-dc HTTP/1.1
             {
               "entities" : [".PID1.FW-service-ID1",
                              "PID1.LB-service-ID2"],
               "properties" : ["compute-load", "storage-capacity", "cpu"]
             }
          response of the global ALTO server: HTTP/1.1 200 OK
             {
               "meta" : {
               },
          "property-map": {
                 "PID1.FW-service-ID1":
                    {"compute-load":80 percentage,"storage-capacity" : 40000 Gbytes, "cpu" :
                    500 Cores},
                 "PID1.LB-service-ID2":
                    {"compute-load":88 percentage,"storage-capacity" : 100 Gbytes, "cpu" : 20
                    Cores}
             } }
```

3. The ALTO client specifies a compute node that can process a specified service request at an edge site, and queries the global ALTO server for a specified service capability and service load information of the single node:

```
          request: POST /propmap/lookup/ane-dc HTTP/1.1
             Host: alto.example.com
             Accept: application/alto-propmap+json,application/alto-error+json
             Content-Type: application/alto-propmapparams+json
             {
               "entities" : [".PID1.FW-service-ID1.ipv4: 10.247.0.10/24"],
               "properties" : ["compute-load", "storage-capacity", "cpu"]
          response of the global ALTO server: HTTP/1.1 200 OK
             {
               "meta" : {
               },
          "property-map": {
                 " PID1.FW-service-ID1.ipv4: 10.247.0.10/24":
                    {"compute-load":60 percentage,"storage-capacity" : 20000 Gbytes, "cpu" :
                    200 Cores}
             } }
```

Step 380: The ALTO client determines an optimal edge site based on the obtained network information and computing power information.

Specifically, in an example, after obtaining network information and computing power information of each edge site or a specified edge site, the ALTO client determines the optimal edge site based on a decision algorithm of an internal device.

Step 390: The ALTO client sends a service request to the optimal edge site.

Specifically, in an example, the ALTO client may send the service request to a compute node at the optimal edge site.

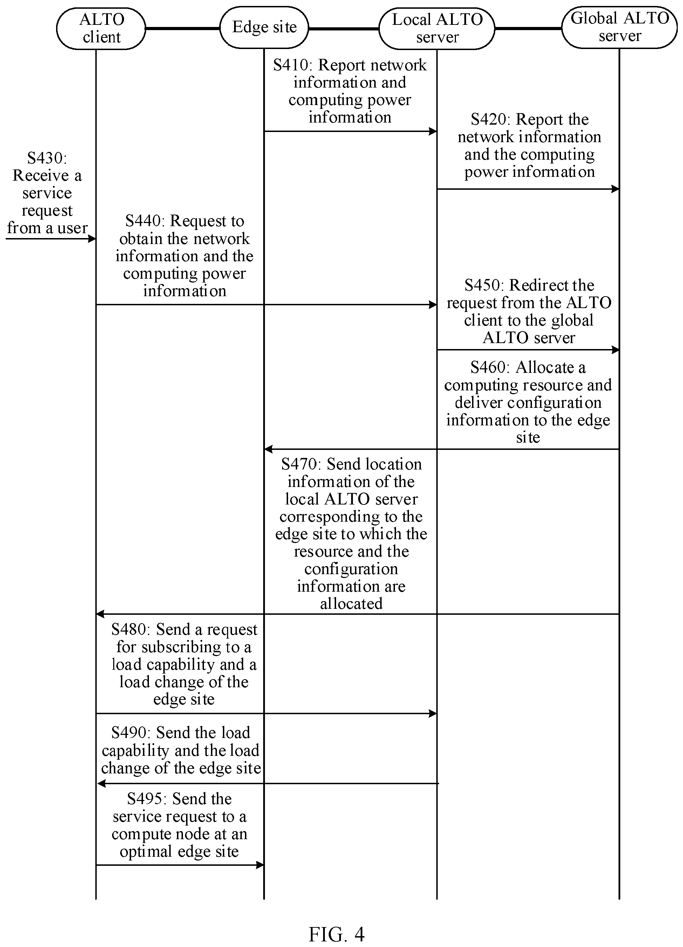

Optionally, in some embodiments, if currently there is no compute node that can process the request of the ALTO client (for example, a compute instance of the compute node is overloaded or does not support the computing capability), the central cloud may coordinate with the edge site to deliver some resources. In this case, the ALTO client may subscribe to a computing power change from the ALTO server, and request a service from the optimal edge compute node after the resources are ready. With reference to FIG. 4, this specific implementation is described in detail below.

FIG. 4 is a schematic flowchart of still another computing power information processing method according to an embodiment of this application. As shown in FIG. 4, the method may include steps 410 to 495. The following describes steps 410 to 495 in detail.

Step 410: An edge site reports network information and computing power information to a local ALTO server associated with the edge site.

Step 420: The local ALTO server publishes the network information and computing power information collected in the local domain to the global ALTO server.

Step 430: The ALTO client receives a service request from a user side.

Step 440: The ALTO client obtains current network information and computing power information from the local ALTO server.

It is to be understood that, steps 410 to 440 are the same as steps 310 to 340. For details, refer to the descriptions in steps 310 to 340. Details are not described herein again.

Step 450: The local ALTO server redirects the request of the ALTO client to the global ALTO server.

In an example, the local ALTO server returns an HTTP 307 (temporary redirect) status code to the ALTO client and indicates an address of the global ALTO server, and the ALTO client further sends the request to the global ALTO server based on the address of the global ALTO server. For details, refer to the descriptions in step 360 in FIG. 3. Details are not described herein again.

Step 460: The global ALTO server allocates a computing resource and delivers configuration information to the edge site.

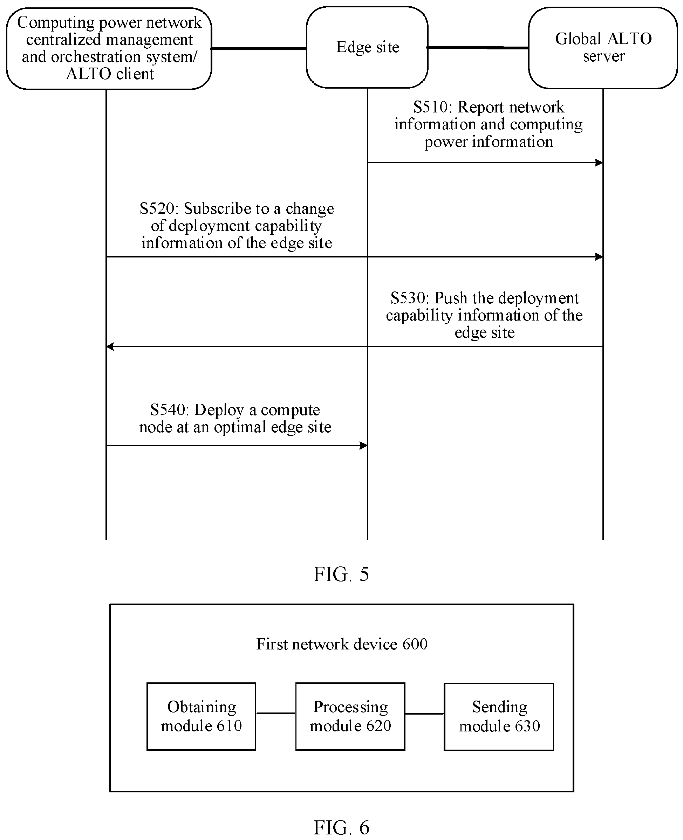

If the global ALTO server determines that there is no compute node that can process the service request in each domain (for example, a compute instance of the compute node is overloaded or does not support the computing capability), the global ALTO server may select a proper edge site based on some policies internally formulated, interact with the computing power network management and orchestration system, deploy a compute instance for the edge site, and deliver the configuration information to an edge site side. For example, an implementation of this step is to increase a quantity of copies of a service instance in a current mainstream computing scheduling platform Kubernetes system. For a specific implementation process in which the global ALTO server intersects with the computing power network management and orchestration system to deploy a compute instance for the edge site, refer to descriptions in FIG. 5. Details are not described herein again.

Step 470: The global ALTO server sends, to the ALTO client, location information of an ALTO server corresponding to a domain of the edge site to which the resource and the configuration information are delivered.

Specifically, the global ALTO server sends, to the ALTO client, a message body of an HTTP 503 (service unavailable) response failure, and carries, in error information, the location information of the ALTO server corresponding to the domain of the edge site to which the resource and the configuration information are delivered. For example, the ALTO server corresponding to the domain of the edge site to which the resource and the configuration information are delivered is the local ALTO server 121.

Step 480: The ALTO client sends, to the local ALTO server 121 in step 470, a request for subscribing to a load capability and a load change of the edge site.

Specifically, after receiving a response packet in step 470, the ALTO client may send, to the local ALTO server 121 carried in step 470, the request for subscribing to the load capability and the load change of the edge site.

Using an example in which the ALTO client requests to subscribe to compute load that serves Acceleration-service-ID3 at the edge site PID1 associated with the local ALTO server 121, the following describes in detail a specific implementation process in which the ALTO client subscribes to the load capability and the load change of the edge site:

```
          POST /propmap/subscribe/on-change/ane-dc HTTP/1.1
             {
               "entities" : [".PID1.Acceleration-service-ID3"],
               "properties" : ["compute-load"]
             }
```

Step 490: The local ALTO server 121 publishes a message to the ALTO client when a computing power resource changes.

For example, the ALTO client requests to subscribe to the compute load that serves the Acceleration-service-ID3 at the edge site PID1 associated with the local ALTO server 121. When the compute load that processes the Acceleration-service-ID3 on the local ALTO server 121 changes, the local ALTO server 121 publishes a response message to the ALTO client. The following describes a possible implementation:

```
          HTTP/1.1 200 OK
               {
                 "meta" : {
                 },
           "property-map": {
                   " .PID1.Acceleration-service-ID3":
                     {"compute-load":10 percentage,"storage-capacity" : 20000 Gbytes,
 "cpu" : 200 Cores}
            } }
```

Step 495: The ALTO client sends a service request to the optimal edge site.

This step is the same as step 390. For details, refer to the descriptions in step 390. Details are not described herein again.

With reference to FIG. 5, the following describes in detail the specific implementation process in which the global ALTO server intersects with the computing power network management and orchestration system to deploy a compute instance for the edge site. It is to be understood that, an example in FIG. 5 is merely intended to help a person skilled in the art understand this embodiment of this application, instead of limiting this embodiment of this application to a specific value or a specific scenario of the example. It is clear that a person skilled in the art can make various equivalent modifications or changes based on the example in FIG. 5 provided below, and such modifications and changes also fall within the scope of embodiments of this application.

FIG. 5 is a schematic flowchart of a method for deploying a compute instance for an edge site according to an embodiment of this application. As shown in FIG. 5, the method may include steps 510 to 540. The following describes steps 510 to 540 in detail.

Step 510: The global ALTO server obtains network information and a site deployment capability of the edge site.

An obtaining manner is the same as the method in step 420. For details, refer to the description in step 420, and details are not described herein again.

It is to be understood that, the site deployment capability of the edge site may include but is not limited to any one or a combination of the following information: remaining compute load, remaining storage space, and remaining memory space of the edge site, a service identifier of the edge site, a service type (for example, a firewall or a load balancer) of the edge site, location information of the edge site, total load information of the edge site, compute load used information, memory used information, total storage space information, total memory information, and disk space information, where a location of the edge site may include geographical location information of the edge site, internet protocol (internet protocol, IP) address information, and location information of a compute node at the edge site deployed in a data center (for example, deployed in which rack or virtual machine (virtual machine, VM) mirror).

Step 520: The computing power network management and orchestration system subscribes to a change of deployment capability information (such as load) of all edge sites from the global ALTO server.

Specifically, in an example, the computing power network management and orchestration system is used as an ALTO client to subscribe to the change of deployment capability information (such as load) of all edge sites from the ALTO server. A possible message example is as follows:
subscription deployment information change:

```
          POST /propmap/subscribe/on-change/ane-dc HTTP/1.1
             {
               "entities" : [".PID1", ".PID2", ".PID3"],
               "properties" : ["cpu-load", "memory-free", "cpu"]
             }//subscribe to changes of three attribute values (a current CPU usage, an idle
             memory, and CPU cores) of edge sites PID1, PID2, and PID3
```

In another example, the computing power network management and orchestration system is used as an ALTO client to periodically subscribe to the deployment capability information (such as load) of all the edge sites from the ALTO server. Based on a period of 30 ms, the ALTO server sends the deployment capability information (such as load) of all the edge sites to the computing power network management and orchestration system every 30 ms. A possible message example is as follows:
periodic (30 ms) subscription deployment information:

```
          POST /propmap/subscribe/period/30ms/ane-dc HTTP/1.1
          {
               "entities" : [".PID1", ".PID2", ".PID3"],
               "properties" : ["cpu-load", "memory-free", "cpu"]
             }//subscribe to the three attribute values (the current CPU usage, the idle memory,
             and the CPU cores) of the edge sites PID1, PID2, and PID3
```

Step 530: The global ALTO server pushes the deployment capability information of the edge sites to the computing power network management and orchestration system.

When the subscribed deployment information in step 520 changes, for example, the compute-load attribute is reduced to 10%, the global ALTO server pushes related content to the computing power network management and orchestration system. A possible message example of a return body is as follows:

```
HTTP/1.1 200 OK
             {
               "meta" : {
               },
          "property-map": {
                 "PID1":
                    {"cpu-load":80 percentage,"memory-free" : 40000 Gbytes, "cpu" : 500
                    Cores},
                 ".PID2":
                    {"cpu-load":88 percentage," memory-free" : 100 Gbytes, "cpu" : 20 Cores},
             } }
```

Optionally, the ALTO client may also implement subscription based on a dimension of a compute node at the edge site, and publishing information of the global ALTO server provides deployment capability information such as CPU load, an idle memory, and CPU cores of all compute nodes at each edge site.

Some determining criteria may be designed in the management and orchestration system. For example, when remaining compute load resources of a compute node at a site are greater than 80%, the edge compute node is selected to deploy a compute instance of the service.

Step 540: The computing power network management and orchestration system allocates a specific resource to an edge site selected by the computing power network management and orchestration system, and delivers computing power deployment configuration information to an edge site side.

In the foregoing technical solutions, in an edge computing scenario, the computing power network management and orchestration system senses computing deployment information such as load of an edge site by using the ALTO protocol, and selects a lightest edge site to deploy a computing task, thereby improving user experience.

It is to be understood that sequence numbers of the foregoing processes do not mean execution sequences in various embodiments of this application. The execution sequences of the processes are to be determined according to functions and internal logic of the processes, and should not be construed as any limitation on the implementation processes of embodiments of this application.

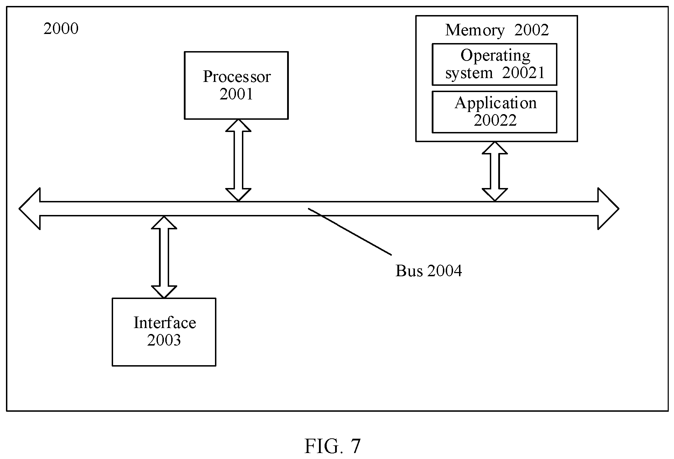

The computing power information processing method provided in embodiments of this application is described in detail above with reference to FIG. 1 to FIG. 5. Apparatus embodiments of this application are described in detail below with reference to FIG. 6 and FIG. 7. It is to be understood that the descriptions of the method embodiments correspond to descriptions of the apparatus embodiments. Therefore, for content not described in detail, refer to the descriptions in the foregoing method embodiments.

FIG. 6 is a schematic diagram of a structure of a first network device 600 according to an embodiment of this application. The first network device 600 shown in FIG. 6 may perform the corresponding steps performed by the first network device in the methods in the foregoing embodiments. As shown in FIG. 6, the first network device 600 includes an obtaining module 610, a processing module 620, and a sending module 630.

The obtaining module 610 is configured to obtain first computing power information, where the first computing power information indicates computing power information of a compute node corresponding to the first network device.

The processing module 620 is configured to generate a first application-layer traffic optimization ALTO message, where the first ALTO message carries the first computing power information.

The sending module 630 is configured to send the first ALTO message to a second network device based on an ALTO protocol.

Optionally, the compute node is located in a first network domain, and the first network domain is associated with the first network device.

Optionally, the first computing power information is carried in a property map field of the first ALTO message.

Optionally, the first network device 600 further includes a receiving module 640.

The receiving module 640 is configured to receive a first subscription request message sent by the second network device, where the first subscription request message is used to request the first network device to report the first computing power information to the second network device when the first computing power information changes. The sending module 630 is specifically configured to send the first ALTO message to the second network device based on the ALTO protocol when the first computing power information changes.

Optionally, the receiving module 640 is configured to receive a first subscription request message sent by the second network device, where the first subscription request message is used to request the first network device to periodically report the first computing power information to the second network device; and the sending module 630 is specifically configured to send the first ALTO message to the second network device based on the ALTO protocol and a preset period.

Optionally, the first subscription request message further includes any one or a combination of the following attribute information: location information of the compute node, link status information, a service type identifier, and computing power type information, the first computing power information carried in the first ALTO message indicates computing power information of the first compute node, and the first compute node is determined by the first network device from the compute node based on the attribute information.

Optionally, the receiving module 640 is further configured to receive a second subscription request message sent by the second network device, where the second subscription request message is used to request the first network device to report service type information supported by the compute node to the second network device; and the sending module is further configured to send a second ALTO message to the second network device based on the ALTO protocol, where the second ALTO message carries the service type information supported by the compute node.

Optionally, the sending module 630 is further configured to send first network information to the second network device, where the first network information indicates network information of the compute node corresponding to the first network device, and the network information includes but is not limited to any one or a combination of the following information: the location information of the compute node, the link status information, and the supported service type information.

Optionally, the first network device is a first local ALTO server of a first operator network, and the second network device is a second local ALTO server of the first operator network; or the first network device is a local ALTO server of the first operator network, and the second network device is a global ALTO server of the first operator network; or the first network device is the global ALTO server of the first operator network, and the second network device is a global ALTO server of a second operator network; or the first network device is the local ALTO server of the first operator network, and the second network device is a local ALTO server of the second operator network; or the first network device is an ALTO server, and the second network device is an ALTO client, where the ALTO server is any one of the following: the local ALTO server of the first operator network, the global ALTO server of the first operator network, the local ALTO server of the second operator network, and the global ALTO server of the second operator network.

Optionally, the first network device is the ALTO server, the second network device is the ALTO client, and the ALTO client is a computing power network management system. The receiving module 640 is further configured to receive a third subscription request message sent by the second network device, where the third subscription request message is used to request first capability information, and the first capability information indicates capability deployment information of the compute node corresponding to the first network device. The sending module 630 is further configured to send a third ALTO message to the second network device based on the ALTO protocol, where the third ALTO message carries the first capability information.

FIG. 7 is a schematic diagram of a hardware structure of a first network device 2000 according to an embodiment of this application. The first network device 2000 shown in FIG. 7 may perform the corresponding steps performed by the first network device in the methods in the foregoing embodiments.

As shown in FIG. 7, the first network device 2000 includes a processor 2001, a memory 2002, an interface 2003, and a bus 2004. The interface 2003 may be implemented in a wireless or wired manner, and may be specifically a network adapter. The processor 2001, the memory 2002, and the interface 2003 are connected through the bus 2004.

The interface 2003 may specifically include a transmitter and a receiver, and is configured to enable the first network device to implement the foregoing receiving and sending. For example, the interface 2003 is configured to support the first network device in sending the first ALTO message to a second network device based on an ALTO protocol.

The processor 2001 is configured to perform processing performed by the first network device in the foregoing embodiments, for example, configured to obtain first computing power information; generate a first application-layer traffic optimization ALTO message, where the first ALTO message carries the first computing power information; and/or is used in another process of the technology described in this specification. The memory 2002 includes an operating system 20021 and an application program 20022, and is configured to store a program, code, or instructions. When a processor or a hardware device executes the program, the code, or the instructions, a processing process related to the first network device in the method embodiments may be completed. Optionally, the memory 2002 may include a read-only memory (read-only memory, ROM) and a random access memory (random access memory, RAM). The ROM includes a basic input/output system (basic input/output system, BIOS) or an embedded system, and the RAM includes an application program and an operating system. When the first network device 2000 needs to be run, a BIOS built in the ROM or a bootloader in the embedded system is used to boot a system, to boot the first network device 2000 to enter a normal running state. After entering the normal running state, the first network device 2000 runs the application and the operating system in the RAM, to complete the processing process related to the first network device 2000 in the method embodiments.

It may be understood that, FIG. 7 merely shows a simplified design of the first network device 2000. In actual application, the first network device may include any quantity of interfaces, processors, or memories.

An embodiment of this application further provides a computer-readable medium. The computer-readable medium stores program code. When the computer program code is run on a computer, the computer is enabled to perform the method performed by the first network device. The computer-readable medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

An embodiment of this application further provides a chip system used in a first network device. The chip system includes at least one processor, at least one memory, and an interface circuit. The interface circuit is responsible for information interaction between the chip system and the outside. The at least one memory, the interface circuit, and the at least one processor are interconnected through a line. The at least one memory stores instructions, and the instructions are executed by the at least one processor, to perform operations of the first network device in the methods in the foregoing aspects.

In a specific implementation process, the chip may be implemented in a form of a central processing unit (central processing unit, CPU), a micro controller unit (micro controller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

An embodiment of this application further provides a computer program product used in a first network device. The computer program product includes a series of instructions, and when the instructions are executed, operations by the first network device in the methods in the foregoing aspects are performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it is to be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computing power information processing method, comprising:
obtaining (S210), by a first network device (111), first computing power information, wherein the first computing power information indicates computing power information of a compute node (112, 113) corresponding to the first network device;
generating (S220), by the first network device, a first application-layer traffic optimization ALTO message, wherein the first ALTO message carries the first computing power information; and
sending (S230), by the first network device, the first ALTO message to a second network device (121) based on an ALTO protocol;
wherein the first computing power information is carried in a property map field of the first ALTO message,
**characterized in that** the method further comprises:
receiving, by the first network device, a first subscription request message sent by the second network device, wherein the first subscription request message is used to request the first network device to report the first computing power information to the second network device when the first computing power information changes, wherein
the sending, by the first network device, the first ALTO message to a second network device based on an ALTO protocol comprises:
sending, by the first network device, the first ALTO message to the second network device based on the ALTO protocol when the first computing power information changes; and
receiving, by the first network device, a second subscription request message sent by the second network device, wherein the second subscription request message is used to request the first network device to report service type information supported by the compute node to the second network device; and
sending, by the first network device, a second ALTO message to the second network device based on the ALTO protocol, wherein the second ALTO message carries the service type information supported by the compute node, wherein the service type supported by the compute node is a fire wall service or a load balancer service.

2. The method according to claim 1, wherein the compute node is located in a first network domain, and the first network domain is associated with the first network device.

3. The method according to claim 1 or 2, wherein the first subscription request message further comprises any one or a combination of the following attribute information: location information of the compute node, link status information, a service type identifier, and computing power type information, the first computing power information carried in the first ALTO message indicates computing power information of the first compute node, and the first compute node is determined by the first network device from the compute node based on the attribute information.

4. A first network device, comprising:
an obtaining module (610), configured to obtain (S210) first computing power information, wherein the first computing power information indicates computing power information of a compute node (112, 113) corresponding to the first network device (111);
a processing module (620), configured to generate (S220) a first application-layer traffic optimization ALTO message, wherein the first ALTO message carries the first computing power information; and
a sending module (630), configured to send (S230) the first ALTO message to a second network device (121) based on an ALTO protocol;
wherein the first computing power information is carried in a property map field of the first ALTO message,
**characterized in that**
the first network device further comprises:
a receiving module, configured to receive a first subscription request message sent by the second network device, wherein the first subscription request message is used to request the first network device to report the first computing power information to the second network device when the first computing power information changes, wherein
the sending module is specifically configured to send the first ALTO message to the second network device based on the ALTO protocol when the first computing power information changes;
and
the receiving module is further configured to receive a second subscription request message sent by the second network device, wherein the second subscription request message is used to request the first network device to report service type information supported by the compute node to the second network device; and
the sending module is further configured to send a second ALTO message to the second network device based on the ALTO protocol, wherein the second ALTO message carries the service type information supported by the compute node, wherein the service type supported by the compute node is a fire wall service or a load balancer service.

5. The first network device according to claim 4, wherein the compute node is located in a first network domain, and the first network domain is associated with the first network device.

6. The first network device according to claim 4 or 5 wherein the first subscription request message further comprises any one or a combination of the following attribute information: location information of the compute node, link status information, and a service type identifier, the first computing power information carried in the first ALTO message indicates computing power information of the first compute node, and the first compute node is determined by the first network device from the compute node based on the attribute information.

7. The first network device according to any one of claims 4 to 6, wherein
the sending module is further configured to send first network information to the second network device, wherein the first network information indicates network information of the compute node corresponding to the first network device, and the network information comprises but is not limited to any one or a combination of the following information: the location information of the compute node, the link status information, the supported service type information, and computing power type information.

## Patentansprüche

1. Verfahren zur Verarbeitung von Rechenleistungsinformationen, umfassend:
Erlangen (S210) erster Rechenleistungsinformationen durch eine erste Netzwerkvorrichtung (111), wobei die ersten Rechenleistungsinformationen Rechenleistungsinformationen eines Rechenknotens (112, 113) angeben, welcher der ersten Netzwerkvorrichtung entspricht;
Generieren (S220) einer ersten Application-Layer-Traffic-Optimization-Nachricht, ALTO-Nachricht, durch die erste Netzwerkvorrichtung, wobei die erste ALTO-Nachricht die ersten Rechenleistungsinformationen enthält; und
Senden (S230) der ersten ALTO-Nachricht basierend auf einem ALTO-Protokoll durch die erste Netzwerkvorrichtung an eine zweite Netzwerkvorrichtung (121);
wobei die ersten Rechenleistungsinformationen in einem Eigenschaftszuordnungsfeld der ersten ALTO-Nachricht enthalten sind,
**dadurch gekennzeichnet, dass** das Verfahren ferner Folgendes umfasst:
Empfangen einer ersten Abonnementanforderungsnachricht, die durch die zweite Netzwerkvorrichtung gesendet wurde, durch die erste Netzwerkvorrichtung, wobei die erste Abonnementanforderungsnachricht dazu verwendet wird, die erste Netzwerkvorrichtung aufzufordern, der zweiten Netzwerkvorrichtung die ersten Rechenleistungsinformationen zu melden, wenn sich die ersten Rechenleistungsinformationen ändern, wobei
das Senden der ersten ALTO-Nachricht basierend auf einem ALTO-Protokoll durch die erste Netzwerkvorrichtung an eine zweite Netzwerkvorrichtung Folgendes umfasst:
Senden der ersten ALTO-Nachricht basierend auf dem ALTO-Protokoll durch die erste Netzwerkvorrichtung an die zweite Netzwerkvorrichtung, wenn sich die erste Rechenleistungsinformationen ändern; und
Empfangen einer zweiten Abonnementanforderungsnachricht, die durch die zweite Netzwerkvorrichtung gesendet wurde, durch die erste Netzwerkvorrichtung, wobei die zweite Abonnementanforderungsnachricht dazu verwendet wird, die erste Netzwerkvorrichtung aufzufordern, der zweiten Netzwerkvorrichtung Informationen über den vom Rechenknoten unterstützten Diensttyp zu melden; und
Senden einer zweiten ALTO-Nachricht basierend auf dem ALTO-Protokoll durch die erste Netzwerkvorrichtung an die zweite Netzwerkvorrichtung, wobei die zweite ALTO-Nachricht die Informationen über den vom Rechenknoten unterstützten Diensttyp enthält, wobei es sich bei dem vom Rechenknoten unterstützten Diensttyp um einen Firewall-Dienst oder einen Load-Balancer-Dienst handelt.

2. Verfahren nach Anspruch 1, wobei sich der Rechenknoten in einer ersten Netzwerkdomäne befindet und die erste Netzwerkdomäne der ersten Netzwerkvorrichtung zugeordnet ist.

3. Verfahren nach Anspruch 1 oder 2, wobei die erste Abonnementanforderungsnachricht ferner eine beliebige oder mehrere beliebige der folgenden Attributinformationen umfasst: Standortinformationen des Rechenknotens, Verbindungsstatusinformationen, eine Diensttypkennung und Informationen zum Rechenleistungstyp, wobei die in der ersten ALTO-Nachricht enthaltenen ersten Rechenleistungsinformationen Rechenleistungsinformationen des ersten Rechenknotens angeben und der erste Rechenknoten basierend auf den Attributinformationen durch die erste Netzwerkvorrichtung von dem Rechenknoten bestimmt wird.

4. Erste Netzwerkvorrichtung, umfassend:
ein Erlangungsmodul (610), das dazu konfiguriert ist, erste Rechenleistungsinformationen zu erlangen (S210), wobei die ersten Rechenleistungsinformationen Rechenleistungsinformationen eines Rechenknotens (112,113) angeben, welcher der ersten Netzwerkvorrichtung (111) entspricht;
ein Verarbeitungsmodul (620), das dazu konfiguriert ist, eine erste Application-Layer-Traffic-Optimization-Nachricht, ALTO-Nachricht, zu generieren (S220), wobei die erste ALTO-Nachricht die ersten Rechenleistungsinformationen enthält; und
ein Sendemodul (630), das dazu konfiguriert ist, die erste ALTO-Nachricht (S230) basierend auf einem ALTO-Protokoll an eine zweite Netzwerkvorrichtung (121) zu senden;
wobei die ersten Rechenleistungsinformationen in einem Eigenschaftszuordnungsfeld der ersten ALTO-Nachricht enthalten sind,
**dadurch gekennzeichnet, dass**
die erste Netzwerkvorrichtung ferner Folgendes umfasst:
ein Empfangsmodul, das dazu konfiguriert ist, eine erste Abonnementanforderungsnachricht, die durch die zweite Netzwerkvorrichtung gesendet wurde, zu empfangen, wobei die erste Abonnementanforderungsnachricht dazu verwendet wird, die erste Netzwerkvorrichtung aufzufordern, der zweiten Netzwerkvorrichtung die ersten Rechenleistungsinformationen zu melden, wenn sich die ersten Rechenleistungsinformationen ändern, wobei
das Sendemodul insbesondere dazu konfiguriert ist, die erste ALTO-Nachricht basierend auf dem ALTO-Protokoll an die zweite Netzwerkvorrichtung zu senden, wenn sich die ersten Rechenleistungsinformationen ändern; und
das Empfangsmodul ferner dazu konfiguriert ist, eine zweite Abonnementanforderungsnachricht, die durch die zweite Netzwerkvorrichtung gesendet wurde, zu empfangen, wobei die zweite Abonnementanforderungsnachricht dazu verwendet wird, die erste Netzwerkvorrichtung aufzufordern, der zweiten Netzwerkvorrichtung Informationen über den vom Rechenknoten unterstützten Diensttyp zu melden; und
das Sendemodul ferner dazu konfiguriert ist, eine zweite ALTO-Nachricht basierend auf dem ALTO-Protokoll an die zweite Netzwerkvorrichtung zu senden, wobei die zweite ALTO-Nachricht die Informationen über den vom Rechenknoten unterstützten Diensttyp enthält, wobei es sich bei dem vom Rechenknoten unterstützten Diensttyp um einen Firewall-Dienst oder einen Load-Balancer-Dienst handelt.

5. Erste Netzwerkvorrichtung nach Anspruch 4, wobei sich der Rechenknoten in einer ersten Netzwerkdomäne befindet und die erste Netzwerkdomäne der ersten Netzwerkvorrichtung zugeordnet ist.

6. Erste Netzwerkvorrichtung nach Anspruch 4 oder 5, wobei die erste Abonnementanforderungsnachricht ferner eine beliebige oder mehrere beliebige der folgenden Attributinformationen umfasst: Standortinformationen des Rechenknotens, Verbindungsstatusinformationen und eine Diensttypkennung, wobei die in der ersten ALTO-Nachricht enthaltenen ersten Rechenleistungsinformationen Rechenleistungsinformationen des ersten Rechenknotens angeben und der erste Rechenknoten basierend auf den Attributinformationen durch die erste Netzwerkvorrichtung von dem Rechenknoten bestimmt wird.

7. Erste Netzwerkvorrichtung nach Anspruch 4 bis 6, wobei das Sendemodul ist ferner dazu konfiguriert ist, erste Netzwerkinformationen an die zweite Netzwerkvorrichtung zu senden, wobei die ersten Netzwerkinformationen Netzwerkinformationen des Rechenknotens angeben, welcher der ersten Netzwerkvorrichtung entspricht, und die Netzwerkinformationen unter anderem eine beliebige oder eine beliebige Kombination der folgenden Informationen umfassen: Standortinformationen des Rechenknotens, Verbindungsstatusinformationen, Informationen zum unterstützten Diensttyp und Informationen zum Rechenleistungstyp.

## Revendications

1. Procédé de traitement d'informations de puissance de calcul, comprenant :
l'obtention (S210), par un premier dispositif de réseau (111), de premières informations de puissance de calcul, dans lequel les premières informations de puissance de calcul indiquent des informations de puissance de calcul d'un nœud de calcul (112, 113) correspondant au premier dispositif de réseau ;
la génération (S220), par le premier dispositif de réseau, d'un premier message d'optimisation du trafic à la couche application, ALTO, dans lequel le premier message ALTO contient les premières informations de puissance de calcul ; et
l'envoi (S230), par le premier dispositif de réseau, du premier message ALTO à un second dispositif de réseau (121) sur la base d'un protocole ALTO ;
dans lequel les premières informations de puissance de calcul sont contenues dans un champ de carte de propriétés du premier message ALTO,
**caractérisé en ce que** le procédé comprend en outre :
la réception, par le premier dispositif de réseau, d'un premier message de demande d'abonnement envoyé par le second dispositif de réseau, dans lequel le premier message de demande d'abonnement est utilisé pour demander au premier dispositif de réseau de rapporter les premières informations de puissance de calcul au second dispositif de réseau lorsque les premières informations de puissance de calcul changent, dans lequel
- l'envoi, par le premier dispositif de réseau, du premier message ALTO à un second dispositif de réseau sur la base d'un protocole ALTO comprend :
l'envoi, par le premier dispositif de réseau, du premier message ALTO au second dispositif de réseau sur la base du protocole ALTO lorsque les premières informations de puissance de calcul changent ; et
la réception, par le premier dispositif de réseau, d'un second message de demande d'abonnement envoyé par le second dispositif de réseau, dans lequel le second message de demande d'abonnement est utilisé pour demander au premier dispositif de réseau de rapporter des informations sur le type de service pris en charge par le nœud de calcul au second dispositif réseau ; et
l'envoi, par le premier dispositif de réseau, d'un second message ALTO au second dispositif de réseau sur la base du protocole ALTO, dans lequel le second message ALTO contient les informations sur le type de service pris en charge par le nœud de calcul, dans lequel le type de service pris en charge par le nœud de calcul est un service de pare-feu ou un service d'équilibrage de charge.

2. Procédé selon la revendication 1, dans lequel le nœud de calcul est situé dans un premier domaine de réseau, et le premier domaine de réseau est associé au premier dispositif de réseau.

3. Procédé selon la revendication 1 ou 2, dans lequel le premier message de demande d'abonnement comprend en outre une quelconque ou une combinaison des informations d'attribut suivantes : des informations de localisation du nœud de calcul, des informations d'état de liaison, un identifiant de type de service et des informations sur le type de puissance de calcul, les premières informations de puissance de calcul contenues dans le premier message ALTO indiquent des informations de puissance de calcul du premier nœud de calcul, et le premier nœud de calcul est déterminé par le premier dispositif de réseau à partir du nœud de calcul sur la base des informations d'attribut.

4. Premier dispositif de réseau, comprenant :
un module d'obtention (610), configuré pour obtenir (S210) des premières informations de puissance de calcul, dans lequel les premières informations de puissance de calcul indiquent des informations de puissance de calcul d'un nœud de calcul (112, 113) correspondant au premier dispositif de réseau (111) ;
un module de traitement (620), configuré pour générer (S220) un premier message d'optimisation du trafic à la couche application, ALTO, dans lequel le premier message ALTO contient les premières informations de puissance de calcul ; et
un module d'envoi (630), configuré pour envoyer (S230) le premier message ALTO à un second dispositif de réseau (121) sur la base d'un protocole ALTO ;
dans lequel les premières informations de puissance de calcul sont contenues dans un champ de carte de propriétés du premier message ALTO,
**caractérisé en ce que**
le premier dispositif de réseau comprend en outre :
un module de réception, configuré pour recevoir un premier message de demande d'abonnement envoyé par le second dispositif de réseau, dans lequel le premier message de demande d'abonnement est utilisé pour demander au premier dispositif de réseau de rapporter les premières informations de puissance de calcul au second dispositif de réseau lorsque les premières informations de puissance de calcul changent, dans lequel
le module d'envoi est spécifiquement configuré pour envoyer le premier message ALTO au second dispositif de réseau sur la base du protocole ALTO lorsque les premières informations de puissance de calcul changent ; et
le module de réception est en outre configuré pour recevoir un second message de demande d'abonnement envoyé par le second dispositif de réseau, dans lequel le second message de demande d'abonnement est utilisé pour demander au premier dispositif de réseau de rapporter des informations sur le type de service pris en charge par le nœud de calcul au second dispositif réseau ; et
le module d'envoi est en outre configuré pour envoyer un second message ALTO au second dispositif de réseau sur la base du protocole ALTO, dans lequel le second message ALTO contient les informations sur le type de service pris en charge par le nœud de calcul, dans lequel le type de service pris en charge par le nœud de calcul est un service de pare-feu ou un service d'équilibrage de charge.

5. Premier dispositif de réseau selon la revendication 4, dans lequel le nœud de calcul est situé dans un premier domaine de réseau, et le premier domaine de réseau est associé au premier dispositif de réseau.

6. Premier dispositif de réseau selon la revendication 4 ou 5, dans lequel le premier message de demande d'abonnement comprend en outre une quelconque ou une combinaison des informations d'attribut suivantes : des informations de localisation du nœud de calcul, des informations d'état de liaison et un identifiant de type de service, les premières informations de puissance de calcul contenues dans le premier message ALTO indiquent des informations de puissance de calcul du premier nœud de calcul, et le premier nœud de calcul est déterminé par le premier dispositif de réseau à partir du nœud de calcul sur la base des informations d'attribut.

7. Premier dispositif de réseau selon l'une quelconque des revendications 4 à 6, dans lequel
le module d'envoi est en outre configuré pour envoyer des premières informations de réseau au second dispositif de réseau, dans lequel les premières informations de réseau indiquent des informations de réseau du nœud de calcul correspondant au premier dispositif de réseau, et les informations de réseau comprennent, mais sans s'y limiter, une quelconque ou une combinaison des informations suivantes : les informations de localisation du nœud de calcul, les informations d'état de liaison, les informations sur le type de service pris en charge et les informations de type de puissance de calcul.
